# EUROPÄISCHE PATENTSCHRIFT

(11) **EP 2 311 687 B1**
(45) Veröffentlichungstag und Bekanntmachung des Hinweises auf die Patenterteilung: **13.03.2013**
(21) Anmeldenummer: 09013506.2
(22) Anmeldetag: 27.10.2009
(51) Int. Cl.: B60P 7/08, B65D 81/05

(54) **Vorrichtung zur Reibwertminderung beim Niederzurren**
Device for reducing friction coefficient in vertical lashing
Dispositif de réduction de la valeur de friction lors d'un amarrage vers le bas

(30) Priorität: 15.10.2009 DE 202009014003 U
(43) Veröffentlichungstag der Anmeldung: 20.04.2011
(73) Patentinhaber: Friedrich von Lien AG, 27404 Zeven (DE)
(72) Erfinder: Klez, Hans-Peter, 56743 Mendig (DE)
(74) Vertreter: Dörner, Kötter & Kollegen

(56) Entgegenhaltungen:
- EP-A2- 2 060 440
- DE-A1- 10 102 982
- DE-U1- 9 214 465
- DE-U1-202007 006 858
- US-A- 3 426 996
- US-A- 5 226 764

## Beschreibung

Die Erfindung betrifft eine Vorrichtung zur Reibwertminderung an Kanten beim Niederzurren bei der Ladungssicherung nach dem Patentanspruch 1. Die Erfindung betrifft weiterhin einen Zurrgurt zur Ladungssicherung, umfassend wenigstens eine Spanneinrichtung.

Bei der kraftschlüssigen Ladungssicherung, dem sogenannten Niederzurren, wird die Ladung durch über Zurrgurte indizierte Vorspannkraft auf die Ladefläche gepresst. Durch dieses Anpressen wird die Reibung zwischen der Ladung und der Ladefläche erhöht. Die Reibungskraft sichert letztendlich die Ladung. Werden Zurrgurte über Ladungskanten geführt, ist der Einsatz von Kantenschonern erforderlich. Durch derartige Kantenschoner werden die Zurrgurte beim Niederzurren geschützt. Zudem wird eine gleichmäßigere Verteilung der Vorspannung erzielt. Als Kantenschoner kommen beispielsweise separate Karton- oder Kunststoffecken zum Einsatz, welche an die Kanten der Ladung angelegt werden, wonach die Zurrgurte über diesen Kantenschonern verspannt werden. Es ist auch bekannt, schlauchartige Schoner aus Kevlar oder Kunststoff über den Zurrgurt zu stülpen, welche an den Kanten der Ladung positioniert werden. Weitere Kantenschoner sind aus der US 5 226 764 A sowie der US 3 426 996 A bekannt.

Nachteilig an den vorbekannten Kantenschonern ist, dass diese die Kantenreibung nur unzureichend verringern, weshalb eine homogene Vorspannungsverteilung über den Zurrgurt nicht gewährleistet werden kann. Bei separaten Kantenschonern besteht zudem die Gefahr eines Verrutschens der Schoner während des Zurrvorgangs.

Hier will die Erfindung Abhilfe schaffen. Der Erfindung liegt die Aufgabe zu Grunde, eine Vorrichtung zur Reibwertminderung an Ladungskanten beim Niederzurren zu schaffen, welche eine gleichmäßige Verteilung der Vorspannung über den Zurrgut beim Niederzurren gewährleistet und bei der einer Positionsänderung während des Zurrvorgangs vermieden ist. Gemäß der Erfindung wird diese Aufgabe durch eine Vorrichtung mit den Merkmalen des Patentanspruchs 1 gelöst.

Mit der Erfindung ist eine Vorrichtung zur Reibwertminderung an Ladungskanten beim Niederzurren geschaffen, welche ein gleichmäßige Verteilung der Vorspannung über den Zurrgurt beim Niederzurren gewährleistet und bei der eine Positionsänderung während des Zurrvorgangs vermieden ist. Durch die schwenkbar miteinander verbundenen Schenkel ist eine flächige Anlage an unterschiedliche Kantenwinkel gewährleistet. Die Durchführung ermöglicht eine gute Führung des Zurrgurts, wodurch eine Positionsänderung während des Zurrvorgangs vermieden ist.

Weiterhin ist zwischen den Schenkeln wenigstens eine Rolle angeordnet. Hierdurch ist eine Führung des Zurrgurts mit einem geringen Rollreibwert bewirkt, wodurch die Kontinuität der Vorspannung über den Zurrgurt weiter verbessert ist.

Weiterhin ist die wenigstens eine Rolle auf der Schwenkachse angeordnet. Hierdurch ist eine optimale Krafteinleitung der Vorspannkraft bewirkt; ein Verschieben der Vorrichtung ist so weiter vermieden.

Weiterhin ist an wenigstens einem Schenkel wenigstens eine Rolle angeordnet, über die der Zurrgurt bewegbar ist. Hierdurch ist eine weitere Reibwertminderung beim Niederzurren bewirkt.

In Ausgestaltung der Erfindung ist ein Schenkel als Doppel-T-Profil ausgebildet. Hierdurch ist eine gute Führung des Zurrgurtes auch im Übergang auf die Rolle bewirkt. Alternativ kann der Schenkel auch als U-Profil ausgebildet sein. Hierdurch ist eine vollflächige Anlage des Schenkels an der zu sichernden Ladung bewirkt.

In weiterer Ausgestaltung der Erfindung sind an den Schenkeln jeweils zwei gegenüberliegend angeordnete Ösen angeformt, durch welche eine gemeinsame Achse geführt ist. Hierdurch ist ein großer möglicher Schwenkwinkel erzielt. Zudem dient die gemeinsame Achse der Aufnahme einer Rolle. Vorteilhaft ist die Öse eines Schenkels an einem um 90° angewinkelten Ausleger angeformt. Bevorzugt ist der Ausleger an einem eine Durchführung aufweisenden Schenkel angeformt.

In Weiterbildung der Erfindung sind die Schenkel in verschiedenen Winkeln zueinander arretierbar ausgebildet. Hierdurch ist die Handhabung der erfindungsgemäßen Vorrichtung verbessert. Die Vorrichtung kann so bereits vor dem Spannen des Zurrgutes an das zu sichernde Ladungsgut angepasst werden.

Bevorzugt ist die Erfindung aus Kunststoff und / oder Metallwerkstoffen hergestellt.

Der Erfindung liegt weiterhin die Aufgabe zu Grunde, einen Zurrgurt zur Ladungssicherung zu schaffen, der ein Niederzurren mit homogener Vorspannung über den Zurrgurt beim Niederzurren ermöglicht. Gemäß der Erfindung wird diese Aufgabe durch die Merkmale des kennzeichnenden Teils des Patentanspruchs 9 gelöst.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

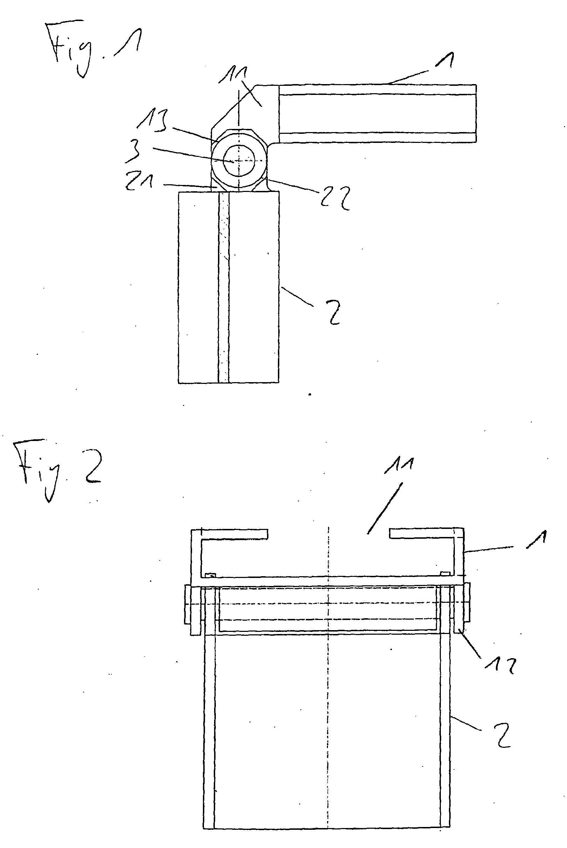

- Figur 1: die Darstellung einer Vorrichtung zur Reibwertminderung in der Sei- tenansicht;
- Figur 2: die Darstellung der Vorrichtung aus Figur 1 in der Ansicht von vorne;

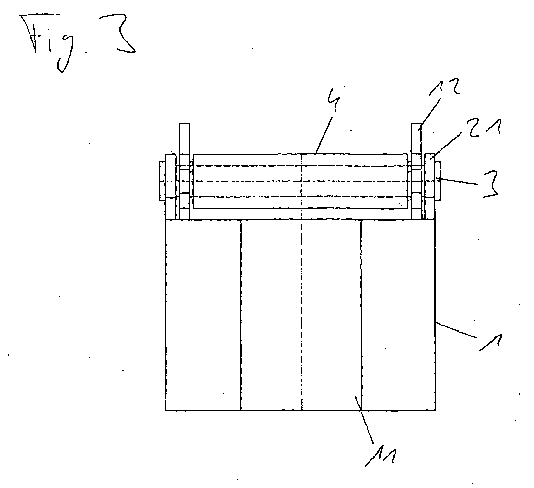

- Figur 3: die Darstellung der Vorrichtung gemäß Figur 1 in der Ansicht von oben;
- Figur 4: die Darstellung einer Vorrichtung zur Reibwertminderung in einer weiteren Ausführungsform in der Seitenansicht;
- Figur 5: die Darstellung der Vorrichtung aus Figur 4 in der Ansicht von vorne;

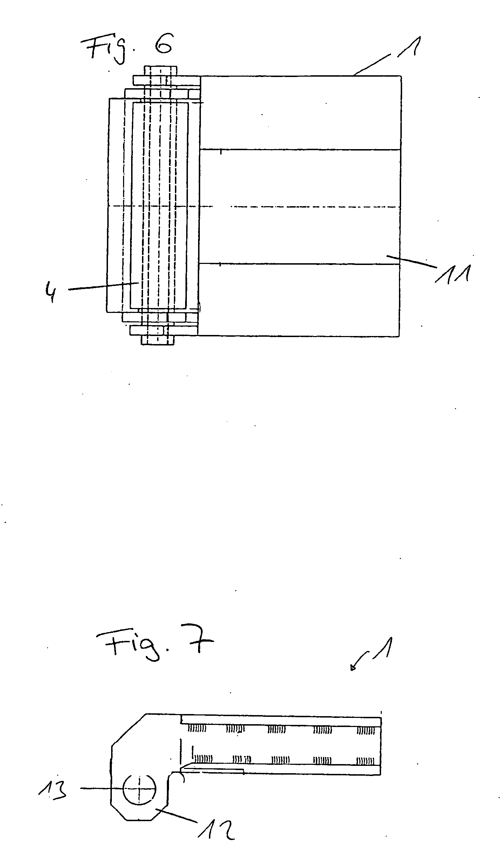

- Figur 6: die Darstellung der Vorrichtung gemäß Figur 4 in der Ansicht von oben;
- Figur 7: die Darstellung des Schenkels mit Durchführung der Vorrichtung gemäß Figur 4 in der Seitenansicht;

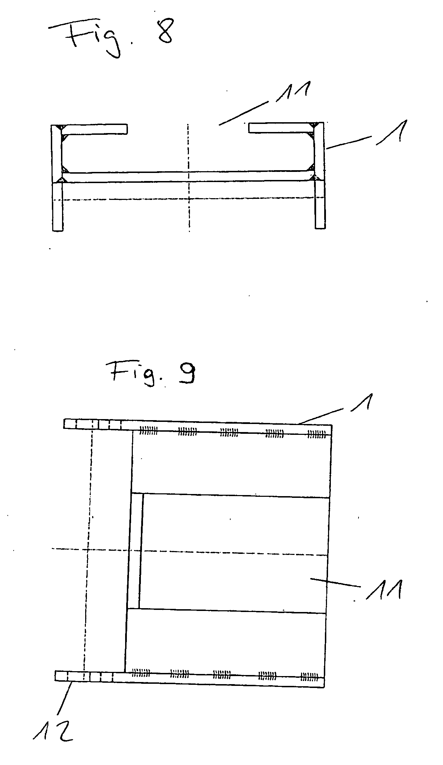

- Figur 8: die Darstellung des Schenkels aus Figur 7 in der Ansicht von vorne;
- Figur 9: die Darstellung des Schenkels aus Figur 7 in der Ansicht von oben;

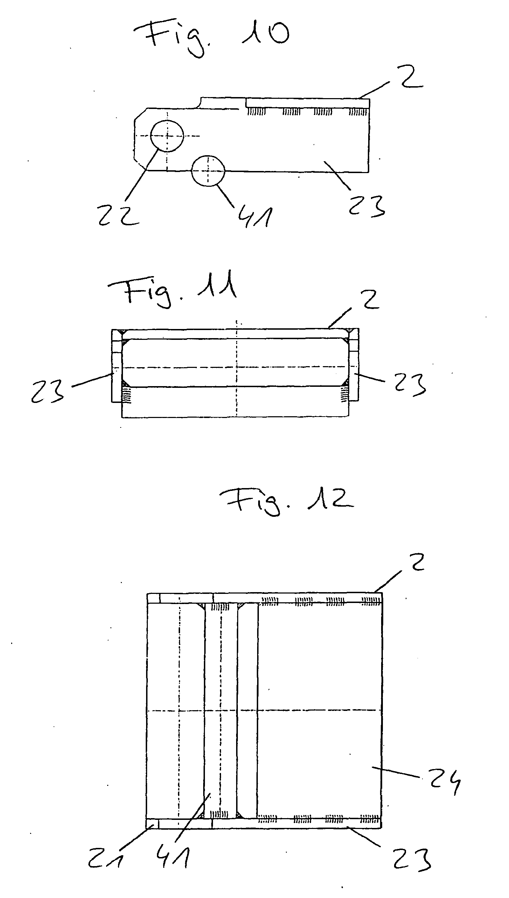

- Figur 10: die Darstellung des zweiten Schenkels der Vorrichtung nach Figur 4 in der Seitenansicht;
- Figur 11: die Darstellung des Schenkels aus Figur 10 in der Ansicht von vorne und
- Figur 12: die Darstellung des Schenkels aus Figur 10 in der Ansicht von oben.

Die als Ausführungsbeispiel gewählte Vorrichtung zur Reibwertminderung an Ladungskanten beim Niederzurren besteht im Wesentlichen aus zwei Schenkeln 1, 2, die über eine Achse 3 schwenkbar miteinander verbunden sind, welche eine Rolle 4 aufnimmt.

Der Schenkel 1 ist im Ausführungsbeispiel im Wesentlichen als C-Profil ausgebildet, mit einer nach oben gerichteten schlitzförmigen Öffnung 11, durch die ein Spanngurt einbringbar ist. An einem Ende ist an dem Schenkel 1 ein um 90° abgewinkelter Ausleger 12 angeformt, in die eine Bohrung 13 zur Durchführung der Achse 3 eingebracht ist. Der Schenkel 1 ist im Ausführungsbeispiel aus Kunststoff hergestellt.

Der Schenkel 2 ist im Wesentlichen als Doppel-T-Profil ausgebildet und ist ebenfalls aus Kunststoff hergestellt. An einem Ende ist an den Schenkel 2 ein im Wesentlichen gerader Ausleger 21 angeformt, in die eine Bohrung 22 zur Aufnahme der Achse 3 eingebracht ist. Die Schenkel 1, 2 sind derart auf der Achse 3 angeordnet, dass die Ausleger 21 des Schenkels 2 zwischen den Auslegern 12 des Schenkels 3 positioniert sind, zwischen denen wiederum die Rolle 4 auf der Achse 3 angeordnet ist.

Die Vorrichtung kann an einem Zurrgurt angebracht werden, in dem dieser durch die Öffnung 11 in die Durchführung des C-profilartigen Schenkels 1 eingebracht wird. Die Fixierung der Vorrichtung an dem Zurrgurt kann entweder vor der Positionierung an dem Ladegut oder auch nachfolgend erfolgen. Beim Zurrvorgang wird der Zurrgurt durch die C-förmige Durchführung des Schenkels 1 bewegt, wobei er um die auf der Achse 3 drehbare Rolle 4 bewegt wird. Der Zurrgurt gleitet dabei auf der Auflage des Doppel-T-förmigen Schenkels 2.

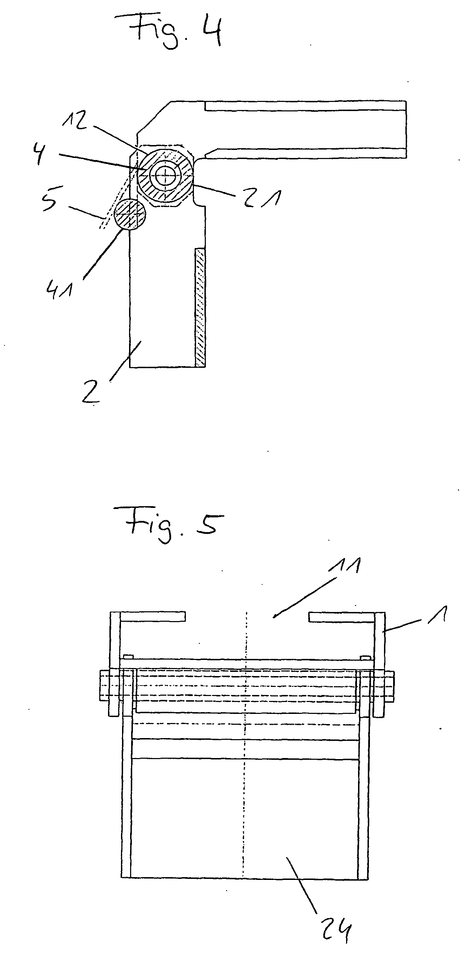

Im Ausführungsbeispiel gemäß Figur 4 ist der Schenkel 2 im Wesentlichen in Art eines U-Profils ausgebildet. Versetzt zur Bohrung 22 ist zwischen den Seitenwänden 23 des Schenkels 2 eine Rolle 41 derart angeordnet, dass sie mit ihrem halben Durchmesser über den Rand der Seitenwände 23 hervorragt. Beabstandet zur Rolle 41 sind die Seitenwände 23 über ein Deckblech 24 verbunden, wodurch eine Durchführung für einen Zurrgurt 5 gebildet ist.

Im Ausführungsbeispiel gemäß Figur 4 ist die zwischen den Schenkeln 1, 2 angeordnete Rolle 4 derart eingerichtet, dass sie nur in Zurrrichtung, also in Richtung des Schenkels 1 bewegbar ist; in Richtung des Schenkels 2 ist die Rolle 41 gesperrt, wodurch der Niederzurrvorgang optimiert ist. Die so ausgebildete Vorrichtung kann durch die durch das Deckblech 24 gebildete Durchführung verliersicher an einem Zurrgurt 5 angeordnet werden. Nach Anlegen der Vorrichtung an ein Ladungsgut kann der Zurrgurt 5 nun durch die Öffnung 11 des Schenkels 1 eingebracht werden, wodurch eine durchgehende Führung des Zurrgurtes 5 gewährleistet ist. Der Zurrgurt 5 ist dabei über die Rollen 4, 41 geführt.

## Patentansprüche

1. Vorrichtung zur Reibungsminderung an Ladungskanten beim Niederzurren, umfassend zwei Schenkel (1, 2), die schwenkbar miteinander verbunden sind, wobei wenigstens ein Schenkel (1) eine Durchführung für einen Zurrgurt aufweist, und wobei an wenigstens einem Schenkel (29) wenigstens eine Rolle (41) angeordnet ist, über die der Zurrgurt bewegbar ist **dadurch gekennzeichnet, dass** zwischen den Schenkeln (1, 2) wenigstens eine Rolle (4) angeordnet ist, wobei die wenigstens eine Rolle (4) auf der Schwenkachse angeordnet ist.

2. Vorrichtung nach Anspruch 1, **dadurch gekennzeichnet, dass** ein Schenkel (2) als Doppel-T-Profil oder als U-Profil ausgebildet ist.

3. Vorrichtung nach einem der vorgenannten Ansprüche, **dadurch gekennzeichnet, dass** an den Schenkeln (1, 2) jeweils zwei gegenüberliegend angeordnete Ausleger (12, 21) mit Bohrungen (13,22) angeformt sind, durch welche eine gemeinsame Achse (3) geführt ist.

4. Vorrichtung nach Anspruch 3, **dadurch gekennzeichnet, dass** der Ausleger (12) eines Schenkels (1) um 90 Grad angewinkelt ausgebildet ist.

5. Vorrichtung nach Anspruch 4, **dadurch gekennzeichnet, dass** der abgewinkelte Ausleger (12) an einem eine Durchführung aufweisenden Schenkel (1) angeformt ist.

6. Vorrichtung nach einem der vorgenannten Ansprüche, **dadurch gekennzeichnet, dass** die Schenkel (1, 2) in verschiedenen Winkeln zueinander arretierbar ausgebildet sind.

7. Vorrichtung nach einem der vorgenannten Ansprüche, **dadurch gekennzeichnet, dass** die Schenkel (1, 2) aus Kunststoff hergestellt sind.

8. Zurrgurt zur Ladungssicherung, umfassend wenigstens eine Spanneinrichtung, **dadurch gekennzeichnet, dass** wenigstens eine Vorrichtung nach einem der vorgenannten Ansprüche angeordnet ist.

## Claims

1. Device for reducing friction at the edges of the load during lashing down comprising two legs (1, 2) being pivotably connected, wherein at least one leg (1) has a duct for a lashing strap and wherein at at least one leg (29) at least one roll (41) is arranged, via which the lashing strap is movable, **characterised in that** between the legs (1, 2) at least one roll (4) is arranged, wherein the at least one roll (4) is arranged on the pivoting axis.

2. Device according to claim 1, **characterised in that** one leg (2) is formed as a double-T section or as a U-section.

3. Device according to one of the previous claims, **characterised in that** two opposite beams (12, 21) having bores (13, 22) are fitted to the legs (1, 2), respectively, through which a joint axis (3) is guided.

4. Device according to claim 3, **characterised in that** the beam (12) of one leg (1) is angled at 90 degrees.

5. Device according to claim 4, **characterised in that** the angled beam (12) is fitted to a leg (1) having a duct.

6. Device according to one of the previous claims, **characterised in that** the legs (1, 2) may be locked at various angles to each other.

7. Device according to one of the previous claims, **characterised in that** the legs (1, 2) are made of plastic.

8. Lashing strap for securing loads comprising at least one clamping device, **characterised in that** at least one device according to one of the previous claims is arranged.

## Revendications

1. Dispositif pour réduire la friction au niveau des arêtes de la charge lors d'un amarrage vers le bas, comprenant deux branches (1, 2) reliées ensemble de manière pivotante, sachant qu'au moins une branche (1) présente un passage pour une sangle d'amarrage et sachant qu'au moins sur une branche (29) est agencé au moins un rouleau (41) via lequel il est possible de déplacer la sangle d'amarrage, **caractérisé en ce qu'**entre les branches (1, 2) est agencé au moins un rouleau (4), sachant qu'au moins ce rouleau (4) est agencé sur l'axe de pivotement.

2. Dispositif selon la revendication 1, **caractérisé en ce qu'**une branche (2) est configurée en double profilé en T ou en profilé en U.

3. Dispositif selon l'une des revendications précédentes, **caractérisé en ce que** contre les branches (1, 2) ont été modelées respectivement deux flèches (12, 21) se faisant face équipées d'alésages (13, 22) par lesquels passe un axe (3) conjoint.

4. Dispositif selon la revendication 3, **caractérisé en ce que** la flèche (12) d'une branche (1) est représentée coudée à 90 degrés.

5. Dispositif selon la revendication 4, **caractérisé en ce que** la flèche coudée (12) est modelée contre une branche (1) présentant un passage traversant.

6. Dispositif selon l'une des revendications précédentes, **caractérisé en ce que** les branches (1, 2) peuvent être configurées blocables selon différents angles les unes par rapport aux autres.

7. Dispositif selon l'une des revendications précédentes, **caractérisé en ce que** les branches (1, 2) sont fabriquées en matière plastique.

8. Sangle d'amarrage pour sécuriser une charge, comprenant au moins un dispositif tendeur, **caractérisée en ce qu'**au moins un dispositif est agencé selon l'une des revendications précédentes.
